# EUROPÄISCHE PATENTSCHRIFT

(11) **EP 2 825 919 B1**
(45) Veröffentlichungstag und Bekanntmachung des Hinweises auf die Patenterteilung: **21.10.2015**
(21) Anmeldenummer: 13713764.2
(22) Anmeldetag: 13.03.2013
(51) Int. Cl.: G05D 13/62, F04D 15/00, G05B 11/36, G01M 1/02

(54) **VERFAHREN UND VORRICHTUNG ZUM PNEUMATISCHEN ANTREIBEN EINES TURBOLADERROTORS IN EINER AUSWUCHTMASCHINE**
METHOD AND DEVICE FOR PNEUMATICALLY DRIVING A TURBOCHARGER ROTOR IN A BALANCING MACHINE
PROCÉDÉ ET DISPOSITIF D'ENTRAÎNEMENT PNEUMATIQUE D'UN ROTOR DE TURBOCOMPRESSEUR DANS UN BANC D'ÉQUILIBRAGE

(30) Priorität: 14.03.2012 DE 102012102160
(43) Veröffentlichungstag der Anmeldung: 21.01.2015
(73) Patentinhaber: Schenck RoTec GmbH, 64293 Darmstadt (DE)
(72) Erfinder: HOERR, Friedrich, 64285 Darmstadt (DE)
(74) Vertreter: Haar, Lucas Heinz Jörn
(86) Internationale Anmeldenummer: PCT/EP2013/055109
(87) Internationale Veröffentlichungsnummer: WO 2013/135758

(56) Entgegenhaltungen:
- DE-A1-102010 036 954
- US-B1- 6 198 246

## Beschreibung

Die Erfindung betrifft ein Verfahren zum pneumatischen Antreiben eines Turboladerrotors in einer Auswuchtmaschine, bei welchem die Antriebsleistung eines pneumatischen Antriebs mittels eines dem pneumatischen Antrieb vorgeschalteten Druckregelventil einstellbar ist und die Drehzahl des Turboladerrotors von einem Drehzahlgeber erfasst und als Drehzahlsignal einer Steuereinrichtung übermittelt wird.

Abgasgetriebene Turbolader haben einen Turboladerrotor, der im Betrieb sehr hohe Betriebsdrehzahlen von oft über 100.000 min⁻¹ erreicht und daher zur Vermeidung von zu hohen Lagerbelastungen und Geräuschen sehr genau ausgewuchtet werden muss. Der Turboladerrotor besteht in der Regel aus einer in einem Lagergehäuse gelagerten Welle, die an einem Ende ein Turbinenrad und am anderen Ende ein Verdichterrad trägt. Zum Messen der Unwucht ist es erwünscht, Turboladerrotoren mit einer im Wesentlichen der normalen Arbeitsgeschwindigkeit entsprechenden Winkelgeschwindigkeit anzutreiben. Der Antrieb erfolgt üblicherweise mittels Druckluft, die auf das Turbinenrad geleitet wird.

Aus EP 0 699 900 B1 ist eine Maschine zum Auswuchten von Turboladern bekannt, bei der das Mittelgehäuse einer von dem Turbinengehäuse und dem Verdichtergehäuse entkleidete Turbolader-Rumpfgruppe auf einem schwingfähigen Messtisch aufgespannt und an eine Schmierölleitung angeschlossen wird. Zum Antrieb des Turboladerrotors wird das Turbinenrad mit einem Druckluftstrahl angetrieben, der aus einer an eine Druckluftleitung angeschlossenen Düse austritt. Der Düse vorgeschaltet ist ein Druckregler und ein Magnetventil zum Absperren der Druckluftzufuhr. Mit Hilfe des Druckreglers kann der Luftdruck an der Düse so eingestellt werden, dass der Turboladerrotor mit einer für die Unwuchtmessung geeigneten Drehgeschwindigkeit angetrieben wird. Die von einer Fotozelle gemessene Drehgeschwindigkeit wird in einen elektronischen Steuerungsprozessor übermittelt, der auch die von einem Schwingungsaufnehmer erfassten Schwingungssignale der Schwingungen des Messtisches erhält, um daraus die auszugleichende Unwucht zu berechnen.

Das Einstellen der für einen Auswuchtvorgang gewünschten Antriebsdrehzahl muss bei der bekannten Vorrichtung von einer Bedienungsperson jeweils durch Verstellen des Druckreglers vorgenommen werden. Kommt es durch Druckschwankungen der Druckluftversorgung oder durch chargenbedingte Einflüsse zu Drehzahlabweichungen, so müssen diese ebenfalls von der Bedienungsperson ausgeglichen werden. Außerdem ist jeweils eine Anpassung der Einstellung an verschiedene Typen von Turboladerrotoren, die auf der gleichen Maschine ausgewuchtet werden können, erforderlich.

Bei einem aus JP 2008 082296 A bekannten Teststand für Turbolader wird die Zufuhr von Luft und Treibstoff zu einer Brennkammer, die Verbrennungsgas zum Antrieb der Turbine des Turboladers erzeugt, mittels Regelventilen in Abhängigkeit von der mit einem Sensor gemessenen Drehzahl des Turboladers und der von einem Sensor gemessenen Temperatur des Verbrennungsgases von einer speicherprogammierbaren Regeleinrichtung mit Rückführung automatisch geregelt.

Aus US 6 198 246 B1 ist ein Verfahren zur Einstellung von Parametern eines Servoreglers in einem Regelkreis zur Regelung der Geschwindigkeit eines Antriebs einer Werkzeugmaschine bekannt, bei welchem Ursprungsparameter an dem Servoregler gesetzt werden, ein Energie enthaltendes Erregungssignal über einen vorgegebenen Frequenzbereich dem Regelkreis zugeführt und die resultierende Frequenzantwort gemessen wird, Vorschlagsparameter und die gemessene Frequenzantwort zur Berechnung einer vorhergesagten Frequenzantwort des Regelkreises auf die Vorschlagsparameter verwendet werden und vorhergesagte Stabilitätsdaten für die vorhergesagte Frequenzantwort. Berechnet und angezeigt werden.

Der Erfindung liegt die Aufgabe zugrunde, ein Verfahren zur Regelung einer Auswuchtdrehzahl eines pneumatisch angetriebenen Turboladerrotors anzugeben, welches geeignet ist, die eingestellte Auswuchtdrehzahl während der Messzeit in engen Grenzen konstant zu halten und welches eine automatische Einstellung eines Reglers zur Regelung der Auswuchtdrehzahl des angetriebenen Turboladerrotors in kurzer Zeit und ohne wiederholte Bedieneingriffe ermöglicht.

Nach der Erfindung wird diese Aufgabe durch ein Verfahren mit den in Anspruch 1 angegebenen Merkmalen gelöst. Vorteilhafte Weiterbildungen des

Verfahrens und eine vorteilhafte Vorrichtung zur Durchführung des Verfahrens sind in den nachfolgenden Ansprüchen angegeben.

Bei dem Verfahren nach der Erfindung wird zum pneumatischen Antreiben eines Turboladerrotors in einer Auswuchtmaschine mittels einer speicherprogrammierbaren Steuereinrichtung mit einem einstellbaren internen Regler die Antriebsleistung eines pneumatischen Antriebs in Abhängigkeit von der Drehzahl des Turboladerrotors geregelt, wobei die Drehzahl des Turboladerrotors von einem Drehzahlgeber erfasst und als Drehzahlsignal dem Regler als Istwert übermittelt wird und wobei für die Regelung erforderliche Parameter durch einen Einstelllauf mit folgenden Schritten empirisch ermittelt werden:
a) Einstellen des Reglers auf ausschließlich proportionales Verhalten mit hoher Verstärkung Kp und Eingabe der Auswucht-Nenndrehzahl als Sollwert für den Regler,
b) Starten des pneumatischen Antriebs und Beschleunigen des Turboladerrotors und Überwachung der Istdrehzahl des Turboladerrotors und Vergleichen der Istdrehzahl mit dem Sollwert, Fortfahren mit Schritt c, wenn die Istdrehzahl den eingestellten Sollwert überschreitet, oder Fortfahren mit Schritt d, wenn die Istdrehzahl unter dem eingestellten Sollwert liegt,
c) Beenden des Antriebs und Bremsen des Turboladerrotors, Halbieren der Verstärkung Kp des Reglers und Wiederholen von Schritt b,
d) Annähern der Istdrehzahl an die Solldrehzahl durch Generieren eines Zusatzsollwerts und additives Aufschalten des Zusatzsollwerts auf den eingestellten Sollwert oder durch Inkrementieren oder Dekrementieren des bereits aufgeschalteten Zusatzsollwerts, bis die Solldrehzahl des Turboladerrotors erreicht ist,
e) Speichern der ermittelten Verstärkung Kp des Reglers, des eingestellten Sollwerts und des ermittelten Zusatzsollwerts als zugriffsbereite Parameter zur Steuerung künftiger Messläufe des dem Einstelllauf unterworfenen Turboladerrotors und von weiteren Turboladerrotoren des diesem entsprechenden Typs.

Das Verfahren nach der Erfindung ermöglicht mit einem in sehr kurzer Zeit vollautomatisch ablaufenden Einstelllauf das Einstellen und Einregeln der vorgegebenen Solldrehzahl des Turboladerrotors für die Durchführung der Unwuchtmessung. Das Verfahren ist einfach durchführbar, denn es erfordert nur die Eingabe der für den auszuwuchtenden Turboladerrotortyp vorgegebenen und anzuwendenden Auswuchtdrehzahl. Danach wird durch den automatischen Einstelllauf das gewünschte Führungsverhalten des Reglers bei nur minimalen Drehzahlabweichungen schnell erreicht. Das Verfahren hat sich als sehr prozesssicher erwiesen und der bauliche Aufwand zur Durchführung des Verfahrens erfordert keine hohen Kosten.

Nach einem weiteren Vorschlag der Erfindung kann vorgesehen sein, dass bei einem dem Einstelllauf nachfolgenden Unwuchtmesslauf nach Erreichen eines engen Istdrehzahl-Toleranzbandes vorübergehend ein I-Anteil auf den Regler aufgeschaltet wird, der kurzzeitig zum Ausregeln benutzt und dann bis zum Beginn des nächsten Unwuchtmesslaufs eingefroren wird. Nach dem Einfrieren läuft der Regler als reiner P-Regler weiter. Der I-Anteil ist dann nicht mehr wirksam, aber sein Einfluss auf die Stellgröße vor dem Einfrieren bleibt erhalten. Durch diese Maßnahme können bleibende Regelabweichungen ausgeglichen werden, die bei Turboladerrotoren des gleichen Typs, z.B. durch zulässige Fertigungsabweichungen von Charge zu Charge entstehen können.

In einer vorteilhaften Weiterbildung des erfindungsgemäßen Verfahrens kann der Turboladerrotor zeitgesteuert von der speicherprogrammierbaren Steuereinrichtung pneumatisch gebremst werden, wobei der Einstelllauf einen Schritt f umfasst, bei welchem der mit Solldrehzahl angetriebene Turboladerrotor abgebremst wird, die optimale Bremszeit für das Abbremsen bis zum Stillstand errechnet und als zugriffsbereiter Parameter für die Steuerung künftiger Messläufe des Turboladerrotors und von Turboladerrotoren des diesem entsprechenden Typs gespeichert wird, um die Zufuhr von Bremsluft entsprechend einstellen zu können. Durch das Verfahren wird das Bremsen des Turboladerrotors in einfacher Weise mit Hilfe eines zeitgesteuerten Zweistellungs-Bremsventils und einem diesem nachgeschalteten Drosselrückschlagventil ermöglicht. Vorzugsweise folgt der Schritt f unmittelbar auf den Schritt e, so dass der Zeitaufwand zur Ermittlung der optimalen Bremszeit minimal ist.

Nach einer anderen vorteilhaften Ausgestaltung der Erfindung kann die Bremsleistung der Bremsdüse mit Hilfe eines proportionalen Druckregelventils durch die Steuereinrichtung nach einer vorgegebenen oder empirisch für einen Typ eines Turboladerrotors ermittelten Bremsstellgröße gesteuert werden. Hierbei kann der Einstelllauf einen Schritt f umfassen, bei welchem der mit Solldrehzahl angetriebene Turboladerrotor mit einer durch eine programmierte interne Bremsstellgröße vorgegebenen Bremsleistung bis zum Stillstand abgebremst wird, die benötigte Bremszeit gemessen, mit einer Nennbremszeit verglichen und eine typspezifische Bremsstellgröße errechnet wird. An den Schritt f kann sich ein Schritt g anschließen, bei welchem der mit Solldrehzahl angetriebene Turboladerrotor mit einer durch die errechnete typspezifische Bremsstellgröße vorgegebenen Bremsleistung bis zum Stillstand abgebremst wird, die benötigte Bremszeit gemessen, mit der Nennbremszeit verglichen, bei Abweichung die typspezifische Bremsstellgröße durch Nachberechnung korrigiert und als zugriffsbereiter Parameter zur Steuerung künftiger Messläufe des dem Einstelllauf unterworfenen Turboladerrotors und weiterer Turboladerrotoren des diesem entsprechenden Typs gespeichert wird.

Um den Turboladerrotor in möglichst kurzer Zeit auf Solldrehzahl zu beschleunigen, kann nach der Erfindung der pneumatische Antrieb mit einer zeitgesteuerten Schnellhochlauffunktion ausgerüstet sein. Zur Ermittlung der optimalen Schnellhochlaufzeit kann nach der Erfindung bei dem Einstelllauf der Turboladerrotor bei abgeschaltetem Regler aus dem Stillstand durch Einschalten der Schnellhochlauffunktion während einer kurzen Zeitspanne beschleunigt werden, wobei aus der in der Zeitspanne erreichten Drehzahl die optimale Schnellhochlaufzeit errechnet und als zugriffsbereiter Parameter für die Steuerung künftiger Messläufe des Turboladerrotors und von Turboladerrotoren des diesem gleichenden Typs gespeichert wird.

Das Verfahren nach der Erfindung wird vorzugsweise als Regelalgorithmus programmiert, der in einem der speicherprogrammierbaren Steuereinrichtung zugeordneten Datenspeicher zugriffsbereit abgelegt wird, so dass das Verfahren nach Aktivierung der speicherprogrammierbaren Steuereinrichtung von dieser automatisch durchführbar ist.

Eine vorteilhafte Vorrichtung zum pneumatischen Antreiben eines Turboladerrotors in einer Auswuchtmaschine umfasst nach der Erfindung einen pneumatische Antrieb mit wenigstens einer an eine Druckluftleitung anschließbaren Antriebsdüse zur Erzeugung eines Treibluftstroms, der auf ein Turbinenrad des Turboladerrotors geleitet wird, wobei die Strömungsleistung des Treibluftstroms mittels eines der wenigstens einen Antriebsdüse vorgeschalteten und von einer speicherprogrammierbaren Steuereinrichtung gesteuerten Proportional-Druckregelventils in Abhängigkeit von der Drehzahl des Turboladerrotors geregelt werden kann, und wobei in einem der speicherprogrammierbaren Steuereinrichtung zugeordneten Datenspeicher ein Regelalgorithmus zugriffsbereit gespeichert ist, welcher die Steuereinrichtung nach ihrer Aktivierung befähigt, das Verfahren nach der Erfindung automatisch zu steuern.

Die Vorrichtung kann weiterhin eine von der speicherprogrammierbaren Steuereinrichtung steuerbare, pneumatische Bremseinrichtung mit einer an eine Druckluftleitung anschließbaren Bremsdüse zur Erzeugung eines Bremsluftstroms aufweisen, der der Drehrichtung des Turboladerrotors entgegen gerichtet auf das Turbinenrad des Turboladerrotors geleitet wird.

Zum Schnellhochlauf des Turboladerrotors kann außerdem der wenigstens einen Antriebsdüse ein von der speicherprogrammierbaren Steuereinrichtung zeitabhängig gesteuertes Schnellhochlaufventil vorgeschaltet sein, durch das die wenigstens eine Antriebsdüse an die Druckluftleitung anschließbar ist.

Die Erfindung wird nachfolgend anhand von Ausführungsbeispielen näher erläutert, die in der Zeichnung dargestellt sind. Es zeigen
- Figur 1: einen Schaltplan einer ersten pneumatischen Antriebsvorrichtung zum Antreiben eines Turboladerrotors in einer Auswuchtmaschine und
- Figur 2: einen Schaltplan einer zweiten pneumatischen Antriebsvorrichtung zum Antreiben eines Turboladerrotors in einer Auswuchtmaschine.

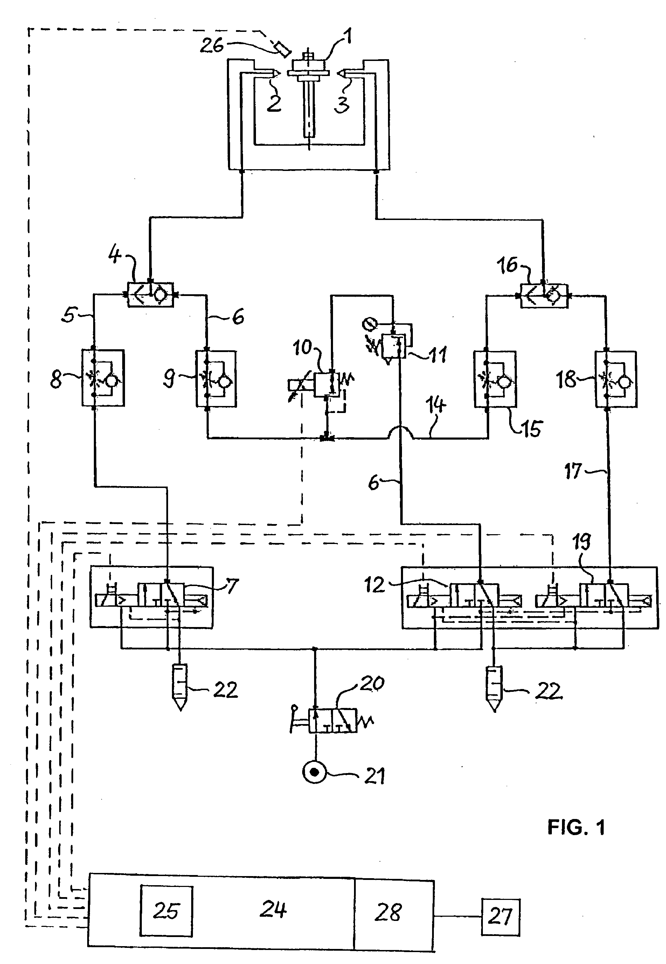

In dem in Figur 1 gezeigten Schaltplan ist ein Turboladerrotor 1 schematisch mit vertikaler Drehachse und ohne die Mittel zu seiner drehbaren Lagerung dargestellt. Das Turbinenrad des Turboladerrotors 1 befindet sich zwischen einer Antriebsdüse 2 und einer dieser gegenüber liegenden Bremsdüse 3. Die Antriebsdüse 2 ist so angeordnet, dass ein von ihr erzeugter Luftstrahl den Turboladerrotor 1 in seiner normalen Drehrichtung antreibt. Die Bremsdüse 3 ist dagegen so angeordnet, dass ein von ihr erzeugter Luftstrahl entgegen der normalen Drehrichtung und damit bremsend auf den Turboladerrotor 1 einwirkt.

Die Antriebsdüse 2 ist über ein Wechselventil 4 mit ODER-Funktion an zwei parallele Leitungszweige 5, 6 angeschlossen. Der Leitungszweig 5 führt zu einem Schnellhochlaufventil 7, das von einem elektromagnetisch schaltbaren Wegeventil mit Vorsteuerung gebildet ist. In dem Leitungszweig 5 befindet sich ein einstellbares Drosselrückschlagventil 8, dessen Rückschlagventil in Richtung des Schnellhochlaufventils 7 öffnet. Das Drosselrückschlagventil 8 dient zur Einstellung der Strömungsleistung für die schnelle Hochlauffunktion.

Der Leistungszweig 6 führt von dem Wechselventil 4 über ein einstellbares Drosselrückschlagventil 9 zu einem elektromagnetisch proportional steuerbaren Druckregelventil 10, das zur Regelung der Antriebsdrehzahl des Turboladerrotors 1 dient. Der Eingang des Druckregelventils 10 ist über ein Druckbegrenzungsventil 11 an ein Normallaufventil 12 angeschlossen ist, das von einem elektromagnetisch schaltbaren Wegeventil mit Vorsteuerung gebildet ist. Das Druckbegrenzungsventil 11 ist einstellbar und hält den Druck am Eingang des Proportional-Druckregelventils 10 auf einem eingestellten Maximalwert. Das Drosselrückschlagventil 9 drosselt den Druckmittelstrom in Richtung der Antriebsdüse 2 und sein Rückschlagventil öffnet in der Gegenrichtung.

Zwischen dem Drosselrückschlagventil 9 und dem Druckregelventil 10 zweigt von dem Leitungszweig 6 ein Leitungszweig 14 ab, der über ein einstellbares Drosselrückschlagventil 15 zu einem Wechselventil 16 führt, dessen Ausgang an die Bremsdüse 3 angeschlossen ist. Der andere Eingang des Wechselventils 16 ist über einen Leitungszweig 17, der ein einstellbares Drosselrückschlagventil 18 enthält, mit einem Bremsventil 19 verbunden, das von einem elektromagnetisch betätigbaren Wegeventil mit Vorsteuerung gebildet ist. Die Drosselrückschlagventile 15, 18 drosseln den Druckmittelstrom in Richtung des Wechselventils 16 und öffnen ohne Drosselwirkung in der Gegenrichtung.

Das Schnellhochlaufventil 7, das Normallaufventil 12 und das Bremsventil 19 sind vorlaufseitig über ein Einschaltventil 20 an eine Druckluftquelle 21 angeschlossen und stehen rücklaufseitig über Schalldämpfer 22 mit der Atmosphäre in Verbindung. Die Steuerung des Schnellhochlaufventils 7, des Normallaufventils 12 und des Bremsventils 19 erfolgt über eine elektrische speicherprogrammierbare Steuereinrichtung 24, die an die Betätigungsmagnete der genannten Ventile angeschlossen ist. Die Steuereinrichtung 24 enthält einen internen Regler 25, an welchen der elektrische Stellantrieb des Druckregelventils 10 angeschlossen ist. Die Steuereinrichtung 24 ist außerdem mit einem Drehzahlgeber 26 verbunden, der ein der Drehzahl des Turboladers 1 proportionales Signal einem schnellen Zählereingang der Steuereinrichtung 24 zuführt und dort zu einer Istdrehzahl verrechnet wird. Die Solldrehzahl kann an einer Eingabevorrichtung 27 eingegeben werden. In einem mit der Steuereinrichtung verbundenen Datenspeicher 28 können eingegebene und empirisch ermittelte Parameter und Programme gespeichert und bereitgestellt werden.

Für einen normalen Hochlauf des Turboladers 1 wird das Normallaufventil 12 geschaltet und dadurch der Leitungszweig 6 mit der Druckluftquelle 21 verbunden. Das Druckregelventil 10 wird von dem Regler 25 der Steuereinrichtung 24 nach zuvor ermittelten und gespeicherten Parametern für den anzutreibenden Turboladerrotor 1 in die optimale Offenstellung gefahren und die Druckluft wird mit dem durch das Druckregelventil 10 geregelten Druck über das Drosselrückschlagventil 9 und das Wechselventil 4 zur Antriebsdüse 2 und außerdem über das Drosselrückschlagventil 15 und das Wechselventil 16 zur Bremsdüse 3 geleitet. Die Drosselrückschlagventile 9, 15 sind dabei so eingestellt, dass die Antriebsleistung der Antriebsdüse 2 die Bremsleistung der Bremsdüse 3 erheblich übersteigt, so dass der Turboladerrotor 1 kontinuierlich bis zur vorgegebenen Solldrehzahl beschleunigt wird. Bei Erreichen der Solldrehzahl wird das Druckregelventil 10 von dem Regler 25 so gesteuert, dass die Antriebsleistung von Antriebsdüse 2 und Bremsdüse 3 in engen Grenzen konstant bleibt.

Zum Stillsetzen des Turboladerrotors 1 wird das Normallaufventil 12 in die Ruhestellung zurück geschaltet, in der der Leitungszweig 6 mit der Atmosphäre verbunden ist. Gleichzeitig wird das Bremsventil 19 für eine zuvor ermittelte Zeitdauer in die Offenstellung geschaltet, in der die Bremsdüse 3 über das Wechselventil 16 und das Drosselrückschlagventil 18 an die Druckluftquelle 21 angeschlossen ist. Die nun allein wirksame Bremsdüse 3 bremst den Turboladerrotor 1 ab, wobei die der vorgegebenen Bremszeit entsprechende Einschaltdauer der Bremsdüse 3 bei gegebener Einstellung des Drosselrückschlagventils 18 so berechnet ist, dass der Turboladerrotor 1 im Wesentlichen zum Stillstand kommt. Soll der Turboladerrotor 1 schneller auf die vorgegebene Solldrehzahl gebracht werden, als dies durch Schalten des Normallaufventils 12 möglich ist, so kann zunächst für eine vorbestimmte Zeitdauer das Schnellhochlaufventil 7 in Offenstellung geschaltet werden. Hierdurch wird allein die Antriebsdüse 2 über das Wechselventil 4 und das Drosseldrückschlagventil 8 mit der Druckluftquelle 21 verbunden, so dass mit höherem Druck und ohne Bremswirkung der Bremsdüse 3 ein sehr schneller Hochlauf erreicht werden kann. Die Einschaltdauer des Schnellhochlaufventils 7 muss hierbei so abgestimmt sein, dass die Drehzahl des Turboladerrotors 1 nicht über die vorgegebene Solldrehzahl hinausschießt. Auf das Schließen des Schnellhochlaufventils 7 folgt sogleich das Öffnen des Normallaufventils 12, wodurch die Drehzahl des Turboladerrotors 1 auf Solldrehzahl gebracht und gehalten wird.

Die verschiedenen Regelparameter für den beschriebenen pneumatischen Antrieb sind von der Gestalt, der Größe und dem axialen Trägheitsmoment des jeweils auszuwuchtenden Turboladerrotors abhängig. Die erforderlichen Parameter müssen daher für jeden Turboladerrotortyp ermittelt werden, damit ein Messlauf mit geregelter Antriebsdrehzahl möglich ist. Nach der Erfindung werden die erforderlichen Parameter mit Hilfe eines Einstelllaufs ermittelt, der von der hierfür programmierten Steuereinrichtung des pneumatischen Antriebs gesteuert automatisch durchgeführt werden kann. Nach Eingabe des Sollwerts für die Auswuchtdrehzahl des anzutreibenden Turboladerrotors wird von einer Bedienungsperson der Einstelllauf gestartet, der dann automatisch wie folgt abläuft:
Die Steuereinrichtung 24 stellt ihren internen Regler 25 anfangs auf reines proportionales Verhalten (P-Verhalten) ein und wählt zunächst einen sehr hohen Verstärkungsfaktor (Proportionalbeiwert) Kp.
Die Steuereinrichtung 24 startet mit dieser Einstellung und Aufschalten der Auswuchtdrehzahl als Sollwert auf den Regler 25 einen ersten Probelauf durch Ansteuerung des Normallaufventils 12.
Falls bei dem Probelauf die gemessene Istdrehzahl des Turboladerrotors 1 während der Beschleunigungsphase weit über den Sollwert hinausgeht, wird der Antrieb durch Zurückschalten des Normallaufventils 12 und Ansteuern des Bremsventils 19 mit Hilfe der Bremsdüse 3 mit durch das Drosselrückschlagventil 18 fest eingestellter Bremsleistung gestoppt. Sodann wird der Verstärkungsfaktor Kp halbiert und der Antrieb erneut gestartet. Dieser Zyklus wird so lange wiederholt, bis der gemessene Drehzahl-Istwert nicht mehr über den Sollwert hinausgeht. Der Antrieb bleibt weiter eingeschaltet und die von dem Regler 25 geregelte Istdrehzahl des angetriebenen Turboladerrotors wird nun in der Regel unter der Solldrehzahl liegen.
Die entsprechend programmierte Steuereinrichtung generiert dann einen Zusatzsollwert und schaltet diesen additiv auf den eingegebenen Sollwert auf. Dieser Zusatzsollwert wird von Null ausgehend so lange inkrementiert oder dekrementiert, bis der Drehzahl-Istwert den eingegebenen Sollwert erreicht hat.
Die zuvor ermittelte Reglerverstärkung Kp und der endgültige Zusatzsollwert werden in dem Datenspeicher 28 in Verbindung mit dem Typ des angetriebenen Turboladerrotors gespeichert und für alle künftigen Messläufe der Steuereinrichtung 24 bereitgestellt.
Anschließend wird der Antrieb mit Hilfe der Bremsdüse 3 abgebremst, wobei die optimale Bremszeit errechnet und ebenfalls typbezogen gespeichert und für künftige Messläufe der Steuereinrichtung 24 bereitgestellt wird. Erweist sich die berechnete Bremszeit als zu lang oder zu kurz, so kann das Drosselrückschlagventil 18 verstellt und der Vorgang zur Ermittlung der optimalen Bremszeit wiederholt werden.
Danach wird durch alleinige Ansteuerung des Schnellhochlaufventils 7 der Schnellhochlaufantrieb kurz eingeschaltet, wobei die optimale Schnellhochlaufzeit errechnet, typbezogen gespeichert und der Steuereinrichtung 24 für alle künftigen Messläufe bereitgestellt wird. Die errechnete Schnellhochlaufzeit kann auch den Wert 0,0 s betragen, wenn das Programm der Steuereinrichtung 24 feststellt, dass über die Schnellhochlauffunktion keine Steigerung der Hochlaufdynamik erreichbar ist, wie beispielsweise bei Turboladerrotoren mit geringem Massenträgheitsmoment.

Bei Messläufen zum Ermitteln der Unwucht eines Turboladerrotors schaltet das Programm der Steuereinrichtung nach Erreichen eines engen Drehzahltoleranzbandes vorübergehend einen typunabhängigen I-Anteil auf den Regler auf. Der I-Anteil wird dabei nur kurz zum Ausregeln benutzt und dann sofort bis zum Beginn des nächsten Messlaufs eingefroren. Hierdurch können bleibende Regelabweichungen vermieden werden, die bei dem gleichen Typ von Turboladerrotor von Charge zu Charge durch fertigungsbedingte Toleranzen entstehen können.

Das beschriebene Verfahren zur Ermittlung und Optimierung von Regel- und Steuerungsparametern für einen pneumatischen Antrieb eines Turboladerrotors ist weitgehend automatisch durchführbar und stellt keine hohen Anforderungen an die Bedienungsperson der Maschine. Das Verfahren arbeitet schnell und führt zu zuverlässigen Messläufen. Für Standard-Regelstrecken bekannte Optimierungs- und Einstellverfahren haben sich als nicht erfolgreich erwiesen, weil bei der Gestaltung des Antriebs der Regler nur in einem Quadranten eingreift. Das Verfahren ist einfach, weil außer der Eingabe der Solldrehzahl keine weiteren Parametervorgaben nötig sind, sondern automatisch empirisch ermittelt werden. Das Verfahren liefert gute Regelparameter, die schnell zu dem gewünschten Führungsverhalten mit minimaler Drehzahlabweichung führen.

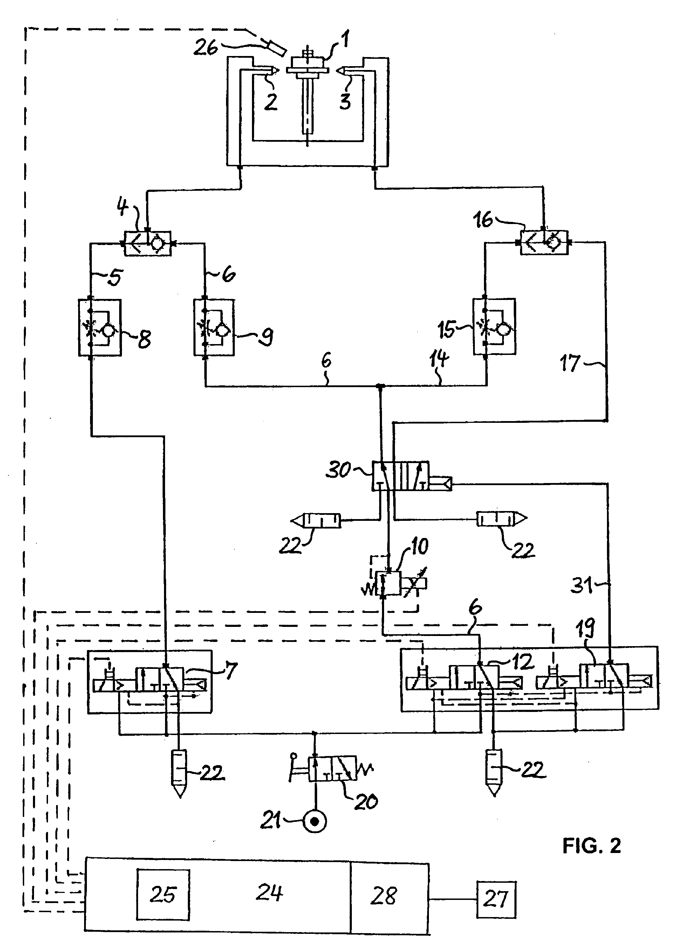

Figur 2 zeigt eine zweite hinsichtlich der Steuerung des Bremsvorgangs abgewandelte Ausführungsform der pneumatischen Antriebsvorrichtung. Bei dieser kann der Druck der der Bremsdüse 3 zugeführten Druckluft und damit die Bremsleistung mit Hilfe des Proportional-Druckregelventils 10 gesteuert werden, das zur Steuerung der Antriebsluft dient. Hierzu ist in dem zur Antriebsdüse 2 führenden Leitungszweig 6 zwischen dem Druckregelventil 10 und der Abzweigung des Leitungszweigs 14 ein pneumatisch betätigbares Mehrwegeventil 30 angeordnet, das über eine Steuerleitung 31 an das Bremsventil 19 angeschlossen und durch dieses steuerbar ist. Als Alternative könnte das Mehrwegeventil 30 mit einer elektromechanischen Betätigungseinrichtung versehen und direkt durch die Steuereinrichtung 24 steuerbar sein. Das Mehrwegeventil 30 hat drei Eingänge und zwei Ausgänge. Der mittlere Eingang ist an das Druckregelventil 10 und die beiden äußeren Eingänge sind jeweils über einen Schalldämpfer 22 mit der Atmosphäre verbunden. An den einen Ausgang des Mehrwegeventils 30 ist der Leitungszweig 6 und an den anderen Ausgang ist ein Leitungszweig 17 angeschlossen, der zu dem der Bremsdüse 3 vorgeschalteten Wechselventil 16 führt. Das bei der Ausführungsform gemäß Figur 1 in dem Leitungszweig 17 angeordnete einstellbare Drosselrückschlagventil 18 ist als nicht mehr notwendig entfallen.

In der einen zum Antreiben des Turboladerrotors 1 bestimmten Stellung schließt das Mehrwegeventil 30 den Leitungszweig 6 und verbindet den Leitungszweig 17 mit der Atmosphäre. In der anderen zum Bremsen des Turboladerrotors 1 bestimmten Stellung, in die das Mehrwegeventil 30 durch Ansteuern des Bremsventils 19 geschaltet wird, verbindet das Mehrwegeventil 30 den Leitungszweig 17 mit dem Druckregelventil 10 und den an den Leitungszweig 6 angeschlossenen Ausgang mit der Atmosphäre. Auf diese Weise kann beim Bremsen der Druck an der Bremsdüse 3 mittels der Steuereinrichtung 24 über das Druckregelventil 10 gesteuert werden. Die Steuereinrichtung 24 benötigt hierzu eine Bremsstellgröße, die dem Datenspeicher entnehmbar ist und die dem Druckregelventil 10 zur Steuerung des Bremsdrucks zugewiesen wird.

Ist für einen Typ von Turboladerrotor keine diesem Typ zugeordnete Bremsstellgröße im Speicher vorhanden, so verwendet die speicherprogrammierbare Steuereinrichtung, beispielsweise bei einem Einstelllauf zur empirischen Ermittlung von Regelparametern, eine programmierte interne Bremsstellgröße von z.B. 50 %, was beispielsweise einem Druck der Druckluft an der Bremsdüse 3 von 3 Bar entspricht. Eine typbezogene Bremsstellgröße muss dann bei einem Einstelllauf, wie nachfolgend beschrieben, empirisch ermittelt werden.

Für einen Einstelllauf zum Ermitteln der Regelparameter für den pneumatischen Antrieb des auszuwuchtenden Turboladerrotors verwendet die speicherprogrammierbare Steuereinrichtung, wenn vorhanden, eine gespeicherte typspezifische Bremsstellgröße, andernfalls die interne Bremsstellgröße. Muss während des Einstelllaufs der Turboladerrotor 1 gebremst werden, so schaltet die Steuereinrichtung das Mehrwegeventil 30 in die Bremsstellung und weist dem Druckregelventil 10 die Bremsstellgröße zu. Das Normallaufventil 12 bleibt auf Antrieb geschaltet. Sobald der Drehzahlsensor 26 feststellt, dass der Turboladerrotor steht, wird, z.B. nach Änderung der Verstärkung Kp des Reglers 25 das Mehrwegeventil 30 zurückgeschaltet und dem Druckregelventil 10 die von dem Regler erzeugte Stellgröße zugewiesen, wodurch der Turboladerrotor wieder angetrieben wird. Wie in Verbindung mit Figur 1 beschrieben kann der Ablauf wiederholt werden, bis die gesuchten Regelparameter, wie die Verstärkung Kp des Reglers 25 und der Zusatzsollwert zum eingestellten Sollwert, ermittelt und typbezogen gespeichert sind.

Sind durch einen Einstelllauf die gesuchten Parameter ermittelt und gespeichert, so kann auf folgende vorteilhafte Weise die optimale Bremsstellgröße zum Bremsen des Turboladerrotors 1 ermittelt werden. Der Turboladerrotor 1 wird mit geregelter Solldrehzahl angetrieben und durch Ansteuerung des Bremsventils 19 und Schalten des Mehrwegeventils 30 in die Bremsstellung gebremst, wobei dem Druckregelventil 10 die interne Bremsstellgröße von 50 % zugewiesen wird. Sobald der Antrieb gestoppt ist, wird das Bremsventil 19 und das Mehrwegeventil 30 in die Antriebsstellung zurückgeschaltet und das Druckregelventil 10 mit zugewiesener Stellgröße 0 % geschlossen. Zugleich wird die sich bei 50 % Bremsdruck ergebene Bremszeit, welche die Dauer des Bremsvorgangs bis zum Stillstand des Turboladerrotors angibt, gemessen und mit einer Nennbremszeit von beispielsweise 1,5 s ins Verhältnis gesetzt. Mit dem errechneten Faktor wird die interne Bremsstellgröße multipliziert. Ergibt das Ergebnis eine Bremsstellgröße von mehr als 100 %, so wird als Bremsstellgröße 100 % bzw. der dieser entsprechende Druck von beispielsweise 6 Bar im Datenspeicher 28 zu den Daten des Turboladerrotortyps abgelegt. In allen anderen Fällen wird der errechnete Prozentwert der Bremsstellgröße typbezogen gespeichert. Hier ein Beispiel: Beträgt die gemessene Bremszeit 2 s und die Nennbremszeit 1,5 s, so ergibt das Verhältnis 2 s / 1,5 s einen Faktor von 1,33. Die berechnete Bremsstellgröße beträgt dann 1,33 x 50 % = 66,66 %.

Zum Prüfen und zur genaueren Anpassung der Bremsstellgröße wird in einem weiteren Lauf der Turboladerrotor 1 erneut auf Wuchtdrehzahl beschleunigt und mit der dem Druckregelventil 10 zugewiesenen errechneten Bremsstellgröße abgebremst und die Bremszeit gemessen. Mit der gemessenen Bremszeit wird die Bremsstellgröße in der gleichen Weise nachberechnet und das Ergebnis der Nachberechnung typbezogen gespeichert und für alle weiteren Messläufe des gleichen Typs der Steuereinrichtung 24 bereitgestellt.

Die in Figur 2 gezeigte Anordnung zur Steuerung des Bremsvorgangs und das beschriebene Verfahren haben den Vorteil, dass eine manuelle Einstellung einer verstellbaren Drossel zur Steuerung der Luftzufuhr zur Bremsdüse entbehrlich ist. Das Spektrum verschiedener Rotortypen, die in derselben Auswuchtmaschine gemessen und ausgewuchtet werden, ist verhältnismäßig groß und nicht alle hiervon umfassten Rotortypen können mit einer mittleren Einstellung einer Drosseleinrichtung für die Bremsluft zufriedenstellend gebremst werden. Bei großen Massenträgheitsmomenten sind die Bremszeiten zu lang und führen zu einer Verlängerung der Taktzeit. Bei kleinen Massenträgheitsmomenten können sich zu kurze Bremszeiten ergeben, die zu fehlerhaftem Abschalten des Bremsdrucks führen können. Durch die Steuerung des Bremsdrucks mit Hilfe des proportionalen Druckregelventils kann der Bremsdruck an die verschiedenen Typen von Turboladerrotoren angepasst werden und für die verschiedenen Typen eine im Wesentlichen einheitliche kurze Bremszeit erreicht werden.

## Patentansprüche

1. Verfahren zum pneumatischen Antreiben eines Turboladerrotors (1) in einer Auswuchtmaschine, bei welchem mittels einer speicherprogrammierbaren Steuereinrichtung (24) mit einem einstellbaren internen Regler (25) die Antriebsleistung eines pneumatischen Antriebs in Abhängigkeit von der Drehzahl des Turboladerrotors (1) geregelt wird, wobei die Drehzahl des Turboladerrotors von einem Drehzahlgeber (26) erfasst und das Drehzahlsignal dem Regler (25) als Istwert übermittelt wird, **dadurch gekennzeichnet, dass** für die Regelung erforderliche Parameter durch einen Einstelllauf mit folgenden Schritten empirisch ermittelt werden:
a) Einstellen des Reglers (25) auf ausschließlich proportionales Verhalten mit hoher Verstärkung Kp und Eingabe der Auswucht-Nenndrehzahl als Sollwert für den Regler (25),
b) Starten des pneumatischen Antriebs und Beschleunigen des Turboladerrotors (1), Überwachung der Istdrehzahl des Turboladerrotors (1) und Vergleichen der Istdrehzahl mit dem Sollwert, Fortfahren mit Schritt c, wenn die Istdrehzahl den eingestellten Sollwert überschreitet, oder Fortfahren mit Schritt d, wenn die Istdrehzahl unter dem eingestellten Sollwert liegt,
c) Beenden des Antriebs und Bremsen des Turboladerrotors(1), Halbieren der Verstärkung Kp des Reglers (25) und Wiederholen von Schritt b,
d) Annähern der Istdrehzahl an die Solldrehzahl durch Generieren eines Zusatzsollwerts und additives Aufschalten des Zusatzsollwerts auf den eingestellten Sollwert und Inkrementieren oder Dekrementieren des Zusatzsollwerts, bis die Solldrehzahl des Turboladerrotors (1) erreicht ist,
e) Speichern der ermittelten Verstärkung Kp des Reglers (25), des eingestellten Sollwerts und des ermittelten Zusatzsollwerts als zugriffsbereite Parameter zur Steuerung künftiger Messläufe des dem Einstelllauf unterworfenen Turboladerrotors (1) und von weiteren Turboladerrotoren des diesem entsprechenden Typs.

2. Verfahren nach Anspruch 1, **dadurch gekennzeichnet, dass** bei einem dem Einstelllauf nachfolgenden Unwuchtmesslauf nach Erreichen eines engen Istdrehzahl-Toleranzbandes vorübergehend ein I-Anteil auf den Regler (25) aufgeschaltet wird, der kurzzeitig zum Ausregeln benutzt und dann bis zum Beginn des nächsten Unwuchtmesslaufs eingefroren wird.

3. Verfahren nach einem der Ansprüche 1 oder 2, **dadurch gekennzeichnet, dass** der Turboladerrotor (1) gesteuert von der speicherprogrammierbaren Steuereinrichtung (24) mittels einer pneumatischen Bremseinrichtung gebremst wird, wobei die Bremszeit und/oder die Bremsleistung der Bremseinrichtung auf einen vom Typ des Turboladerrotors (1) abhängigen Wert eingestellt wird.

4. Verfahren nach einem der Ansprüche 1 oder 2, **dadurch gekennzeichnet, dass** der Turboladerrotor (1) gesteuert von der speicherprogrammierbaren Steuereinrichtung (24) mittels einer pneumatischen Bremseinrichtung gebremst wird, deren Bremsleistung mit Hilfe eines proportionalen Druckregelventils (10) durch die Steuereinrichtung (24) nach einer vorgegebenen oder empirisch für einen Typ eines Turboladerrotors (1) ermittelten Bremsstellgröße gesteuert wird.

5. Verfahren nach Anspruch 3, **dadurch gekennzeichnet, dass** der Einstelllauf einen Schritt f umfasst, bei welchem der mit Solldrehzahl angetriebene Turboladerrotor (1) abgebremst wird, die optimale Bremszeit für das Abbremsen bis zum Stillstand errechnet und als zugriffsbereiter Parameter zur Steuerung künftiger Messläufe des Turboladerrotors (1) und von Turboladerrotoren des diesem entsprechenden Typs gespeichert wird.

6. Verfahren nach Anspruch 4, **dadurch gekennzeichnet, dass** der Einstelllauf einen Schritt f umfasst, bei welchem der mit Solldrehzahl angetriebene Turboladerrotor (1) mit einer durch eine programmierte interne Bremsstellgröße vorgegebenen Bremsleistung bis zum Stillstand abgebremst wird, die benötigte Bremszeit gemessen, mit einer Nennbremszeit verglichen und eine typspezifische Bremsstellgröße errechnet wird.

7. Verfahren nach Anspruch 6, **dadurch gekennzeichnet, dass** sich an den Schritt f ein Schritt g anschließt, bei welchem der mit Solldrehzahl angetriebene Turboladerrotor (1) mit einer durch die typspezifische Bremsstellgröße vorgegebenen Bremsleistung bis zum Stillstand abgebremst wird, die benötigte Bremszeit gemessen, mit der Nennbremszeit verglichen, bei Abweichung die typspezifische Bremsstellgröße durch Nachberechnung korrigiert und als zugriffsbereiter Parameter zur Steuerung künftiger Messläufe des dem Einstelllauf unterworfenen Turboladerrotors (1) und weiterer Turboladerrotoren des diesem entsprechenden Typs gespeichert wird.

8. Verfahren nach einem der Ansprüche 3 bis 7, **dadurch gekennzeichnet, dass** der Schritt f auf den Schritt e unmittelbar folgt.

9. Verfahren nach einem der vorhergehenden Ansprüche, wobei der pneumatische Antrieb mit einer zeitgesteuerten Schnellhochlauffunktion ausgerüstet ist, **dadurch gekennzeichnet, dass** bei dem Einstelllauf der Turboladerrotor bei abgeschaltetem Regler (25) aus dem Stillstand durch Einschalten der Schnellhochlauffunktion während einer kurzen Zeitspanne beschleunigt wird, wobei die optimale Schnellhochlaufzeit errechnet und als zugriffsbereiter Parameter für die Steuerung künftiger Messläufe des Turboladerrotors (1) und von Turboladerrotoren des diesem entsprechenden Typs gespeichert wird.

10. Verfahren nach einem der vorhergehenden Ansprüche, **dadurch gekennzeichnet, dass** es als Regelalgorithmus programmiert wird und der Regelalgorithmus in einem der speicherprogrammierbaren Steuereinrichtung (24) zugeordneten Datenspeicher (28) zugriffsbereit gespeichert wird, so dass nach Aktivierung der Steuereinrichtung (24) das Verfahren von dieser automatisch durchführbar ist.

11. Vorrichtung zum pneumatischen Antreiben eines Turboladerrotors (1) in einer Auswuchtmaschine, wobei der pneumatische Antrieb des Turboladerrotors (1) wenigstens eine an eine Druckluftleitung anschließbare Antriebsdüse (2) zur Erzeugung eines Treibluftstroms aufweist, der auf ein Turbinenrad des Turboladerrotors geleitet wird, **dadurch gekennzeichnet, dass** die Strömungsleistung des Treibluftstroms mittels eines der wenigstens einen Antriebsdüse (2) vorgeschalteten und von einer speicherprogrammierbaren Steuereinrichtung (24) gesteuerten proportionalen Druckregelventils (10) in Abhängigkeit von der Drehzahl des Turboladerrotors (1) geregelt werden kann, wobei in einem der speicherprogrammierbaren Steuereinrichtung (24) zugeordneten Datenspeicher (28) ein Regelalgorithmus zugriffsbereit gespeichert ist, welcher die Steuereinrichtung (24) nach ihrer Aktivierung befähigt, das Verfahren nach einem der vorhergehenden Ansprüche automatisch zu steuern.

12. Vorrichtung nach Anspruch 11, **gekennzeichnet durch** eine von der speicherprogrammierbaren Steuereinrichtung (24) steuerbare, pneumatische Bremseinrichtung mit einer an die Druckluftleitung anschließbaren Bremsdüse (3) zur Erzeugung eines Bremsluftstroms, der der Drehrichtung des Turboladerrotors (1) entgegen gerichtet auf das Turbinenrad des Turboladerrotors (1) geleitet wird.

13. Vorrichtung nach Anspruch 12, **dadurch gekennzeichnet, dass** die Bremsdüse (3) über ein Wechselventil (16) entweder über ein erstes einstellbares Drosselrückschlagventil (15) mit einer Leitung (6) zur Zuführung der Antriebsluft zu Antriebsdüse (2) oder über eine Leitung (17) mit einem Ventil (19, 30) zur Zuführung von Bremsluft verbunden ist.

14. Vorrichtung nach Anspruch 13, **dadurch gekennzeichnet, dass** das Ventil (30) zur Zuführung von Bremsluft ein an den Ausgang des proportionalen Druckregelventils (10) angeschlossenes Mehrwegeventil (30) ist, durch welches das Druckregelventils (10) mit der Antriebsdüse (2) oder mit der Bremsdüse (3) verbindbar ist.

15. Vorrichtung nach einem der Ansprüche 11 bis 14, **dadurch gekennzeichnet, dass** zum Schnellhochlauf des Turboladerrotors (1) die wenigstens eine Antriebsdüse (2) parallel zum proportionalen Druckregelventil (10) an ein von der speicherprogrammierbaren Steuereinrichtung zeitabhängig gesteuertes Schnellhochlaufventil (7) angeschlossen ist, durch das die wenigstens eine Antriebsdüse (2) mit der Druckluftleitung verbindbar ist.

## Claims

1. A method for pneumatically driving a turbocharger rotor (1) in a balancing machine, in which the propulsive power of a pneumatic drive is controlled in dependence upon the rotational frequency of the turbocharger rotor (1) by means of a programmable logic control device (24) having an adjustable internal controller (25), wherein the rotational frequency of the turbocharger rotor is detected by a speed sensor (26) and the speed signal is transmitted to the controller (25) as actual value, **characterized in that** parameters necessary for the control are determined empirically by a tuning run comprising the following steps:
(a) tuning the controller (25) to an exclusively proportional control action with high gain Kp and input of the nominal balancing speed as target value for the controller (25);
(b) starting the pneumatic drive and accelerating the turbocharger rotor (1), monitoring the actual speed of the turbocharger rotor (1) and comparing the actual speed with the target value, continuing with step (c) if the actual speed exceeds the set target value, or continuing with step (d) if the actual speed is below the set target value;
(c) terminating the drive and decelerating the turbocharger rotor (1), halving the gain Kp of the controller (25) and repeating step (b);
(d) approximating the actual speed to the target speed by generating an additional target value and additively applying the additional target value to the set target value and incrementing or decrementing the additional target value until the target speed of the turbocharger rotor (1) is reached; and
(e) storing the determined gain Kp of the controller (25), the set target value and the determined additional target value as parameters ready to be accessed for controlling future measuring runs of the turbocharger rotor (1) subjected to the tuning run and further turbocharger rotors of corresponding type.

2. The method according to claim 1, **characterized in that** in an unbalance measuring run succeeding the tuning run and upon attainment of a narrow actual speed tolerance band, an I component is temporarily applied to the controller (25) to be used for loop tuning briefly and then frozen until the beginning of the next unbalance measuring run.

3. The method according to any one of the claims 1 or 2, **characterized in that** the turbocharger rotor (1) is decelerated by means of a pneumatic braking device under control of the programmable logic control device (24), with the braking time and/or the braking power of the braking device being adjusted to a value dependent on the type of turbocharger rotor (1).

4. The method according to any one of the claims 1 or 2, **characterized in that** the turbocharger rotor (1) is decelerated under control of the programmable logic control device (24) by means of a pneumatic braking device whose braking power is controlled by the control device (24) by means of a proportional pressure control valve (10) according to a brake manipulated variable predetermined or determined empirically for a particular type of turbocharger rotor (1).

5. The method according to claim 3, **characterized in that** the tuning run comprises a step (f) in which the turbocharger rotor (1) driven at target speed is decelerated, the optimum braking time for deceleration until standstill is computed and stored as readily accessible parameter for the control of future measuring runs of the turbocharger rotor (1) and turbocharger rotors of corresponding type.

6. The method according to claim 4, **characterized in that** the tuning run comprises a step (f) in which the turbocharger rotor (1) driven at target speed is decelerated until standstill using a braking power predetermined by a programmed internal brake manipulated variable, the required braking time is measured, compared with a nominal braking time, and a type-specific brake manipulated variable is calculated.

7. The method according to claim 6, **characterized in that** step (f) is succeeded by a step (g) in which the turbocharger rotor (1) driven at target speed is decelerated until standstill using a braking power predetermined by the type-specific brake manipulated variable, the required braking time is measured, compared with the nominal braking time, in the event of a deviation, the type-specific brake manipulated variable is corrected by recalculation and stored as a readily accessible parameter for the control of future measuring runs of the turbocharger rotor (1) subjected to the tuning run and further turbocharger rotors of corresponding type.

8. The method according to any one of the claims 3 to 7, **characterized in that** step (f) succeeds immediately upon step (e).

9. The method according to any one of the preceding claims, wherein the pneumatic drive is equipped with a time-controlled fast run-up function, **characterized in that** in the tuning run the turbocharger rotor is accelerated from standstill by activating the fast run-up function during a brief time span with the controller (25) deactivated, with the optimum fast run-up time being calculated and stored as a readily accessible parameter for the control of future measuring runs of the turbocharger rotor (1) and of turbocharger rotors of corresponding type.

10. The method according to any one of the preceding claims, **characterized in that** it is programmed as a control algorithm and said control algorithm is held ready for access in a data memory (28) allocated to the programmable logic control device (24), so that the method can be implemented automatically by said programmable logic control device (24) upon its activation.

11. A device for pneumatically driving a turbocharger rotor (1) in a balancing machine, wherein the pneumatic drive of the turbocharger rotor (1) includes at least one drive nozzle (2) connectible to a compressed-air line for generating a drive air stream directed to a turbine wheel of the turbocharger rotor, **characterized in that** the flow rate of the drive air stream is controllable in dependence upon the speed of the turbocharger rotor (1) by means of a proportional pressure control valve (10) arranged upstream of the at least one drive nozzle (2) and controlled by a programmable logic control device (24), wherein a data memory (28) allocated to the programmable logic control device (24) stores a control algorithm ready to be accessed which enables the control device (24), upon its activation, to control the method according to any one of the preceding claims automatically.

12. The device according to claim 11, **characterized by** a pneumatic braking device controllable by the programmable logic control device (24) and including a brake nozzle (3) connectible to the compressed-air line for generating a brake air stream directed to the turbine wheel of the turbocharger rotor (1) in opposition to the direction of rotation of the turbocharger rotor (1).

13. The device according to claim 12, **characterized in that** the brake nozzle (3) is connected by a shuttle valve (16) either through a first adjustable throttle check valve (15) to a line (6) for the supply of drive air to the drive nozzle (2), or via a line (17) to a valve (19, 30) for the supply of brake air.

14. The device according to claim 13, **characterized in that** the valve (30) for the supply of brake air is a multiway valve (30) which is connected to the outlet of the proportional pressure control valve (10) and enables the pressure control valve (10) to be connected to the drive nozzle (2) or to the brake nozzle (3).

15. The device according to any one of the claims 11 to 14, **characterized in that** for fast run-up of the turbocharger rotor (1) the at least one drive nozzle (2) is connected parallel to the proportional pressure control valve (10) to a fast run-up valve (7) controlled by the programmable logic control device in dependence upon time, through which valve the at least one drive nozzle (2) is connectible to the compressed-air line.

## Revendications

1. Procédé d'entraînement pneumatique d'un rotor de turbocompresseur (1) sur un banc d'équilibrage dans lequel la puissance d'entraînement d'un entraînement pneumatique est réglée en fonction de la vitesse de rotation du rotor de turbocompresseur (1) au moyen d'un dispositif de commande programmable à mémoire (24) avec un régulateur interne réglable (25), la vitesse de rotation du rotor de turbocompresseur étant mesurée par un transmetteur de vitesse (26) et le signal de vitesse de rotation étant transmis au régulateur (25) en tant que valeur effective, **caractérisé en ce que** les paramètres nécessaires au réglage sont déterminés de façon empirique au moyen d'une course de réglage avec les étapes suivantes :
a) réglage du régulateur (25) sur un comportement exclusivement proportionnel avec une forte amplification Kp et saisie de la vitesse de rotation nominale d'équilibrage en tant que valeur de consigne pour le régulateur (25),
b) démarrage de l'entraînement pneumatique et accélération du rotor de turbocompresseur (1), surveillance de la vitesse de rotation effective du rotor de turbocompresseur (1) et comparaison de la vitesse de rotation effective avec la valeur de consigne, poursuite à l'étape c si la vitesse de rotation effective dépasse la valeur de consigne fixée ou poursuite à l'étape d si la vitesse de rotation effective est inférieure à la valeur de consigne fixée,
c) fin de l'entraînement et freinage du rotor de turbocompresseur (1), division par deux de l'amplification Kp du régulateur (25) et répétition de l'étape b,
d) rapprochement de la vitesse de rotation effective à la vitesse de rotation de consigne en générant une valeur de consigne supplémentaire et en appliquant de manière additive la valeur de consigne supplémentaire à la valeur de consigne fixée et en incrémentant ou décrémentant la valeur de consigne supplémentaire jusqu'à ce que la vitesse de rotation de consigne du rotor de turbocompresseur (1) soit atteinte,
e) enregistrement de l'amplification Kp du régulateur (25) déterminée, de la valeur de consigne fixée et de la valeur de consigne supplémentaire déterminée en tant que paramètres accessibles pour la commande de futures courses de mesure du rotor de turbocompresseur (1) soumis à la course de réglage et d'autres rotors de turbocompresseur d'un type correspondant à celui-ci.

2. Procédé selon la revendication 1, **caractérisé en ce que,** lors d'un course de mesure du balourd faisant suite à la course de réglage, après qu'une bande de tolérance étroite de la vitesse de rotation effective est atteinte, une fraction I est appliquée provisoirement au régulateur (25) et est utilisée pendant un court moment pour la régulation, et est ensuite gelée jusqu'au début de la course de mesure du balourd suivante.

3. Procédé selon l'une des revendications 1 ou 2, **caractérisé en ce que** le rotor de turbocompresseur (1), commandé par le dispositif de commande programmable à mémoire (24), est freiné au moyen d'un dispositif de freinage pneumatique, le temps de freinage et/ou la puissance de freinage du dispositif de freinage étant réglé(e) sur une valeur qui dépend du type de rotor de turbocompresseur (1).

4. Procédé selon l'une des revendications 1 ou 2, **caractérisé en ce que** le rotor de turbocompresseur (1), commandé par le dispositif de commande programmable à mémoire (24), est freiné par le dispositif de commande (24) au moyen d'un dispositif de freinage pneumatique dont la puissance de freinage est commandée à l'aide d'une valve de régulateur de pression proportionnelle (10) en fonction d'une grandeur de réglage de freinage prédéfinie ou déterminée de façon empirique pour un type de rotor de turbocompresseur (1)

5. Procédé selon la revendication 3, **caractérisée en ce que** la course de réglage comporte une étape f dans laquelle le rotor de turbocompresseur (1), entraîné à la vitesse de rotation de consigne, est freiné, le temps de freinage optimal pour le freinage jusqu'à l'arrêt est calculé et enregistré en tant que paramètre accessible pour la commande de futures courses de mesure du rotor de turbocompresseur (1) et de rotors de turbocompresseur d'un type correspondant à celui-ci

6. Procédé selon la revendication 4, **caractérisé en ce que** la course de réglage comporte une étape f dans laquelle le rotor de turbocompresseur (1), entraîné à la vitesse de rotation de consigne, est freiné jusqu'à l'arrêt avec une puissance de freinage prédéfinie par une grandeur de réglage de freinage interne programmée, le temps de freinage nécessaire est mesuré, il est comparé à un temps de freinage nominal et une grandeur de réglage de freinage spécifique à chaque type est calculée.

7. Procédé selon la revendication 6, **caractérisé en ce que** l'étape f est suivie d'une étape g dans laquelle le rotor de turbocompresseur (1), entraîné à une vitesse de rotation de consigne, est freiné jusqu'à l'arrêt avec une puissance de freinage prédéfinie par la grandeur de réglage de freinage spécifique à chaque type, le temps de freinage nécessaire est mesuré, il est comparé à un temps de freinage nominal, en cas d'écart la grandeur de réglage de freinage spécifique à chaque type est corrigée par rectification du calcul et elle est enregistrée en tant que paramètre accessible pour commander de futures courses de mesure du rotor de turbocompresseur (1) soumis à la course de réglage et d'autres rotors de turbocompresseur d'un type correspondant à celui-ci.

8. Procédé selon l'une des revendications 3 à 7, **caractérisé en ce que** l'étape f vient immédiatement après l'étape e.

9. Procédé selon l'une des revendications précédentes, dans lequel l'entraînement pneumatique est équipé d'une fonction de démarrage rapide contrôlée dans le temps, **caractérisé en ce que,** lors de la course de réglage, le rotor de turbocompresseur, alors que le régulateur (25) est déconnecté, est accéléré depuis l'arrêt pendant un court laps de temps en activant la fonction de démarrage rapide, le temps de démarrage rapide optimal étant calculé et enregistré, en tant que paramètre accessible pour commander de futures courses de mesure du rotor de turbocompresseur (1) et de rotors de turbocompresseur d'un type correspondant à celui-ci.

10. Procédé selon l'une des revendications précédentes, **caractérisé en ce qu'**il est programmé en tant qu'algorithme de réglage et l'algorithme de réglage est enregistré, prêt à être consulté, dans une mémoire de données (28) affectée au dispositif de commande programmable à mémoire (24) de sorte qu'après l'activation du dispositif de commande (24), celui-ci peut exécuter automatiquement le procédé.

11. Dispositif pour l'entraînement pneumatique d'un rotor de turbocompresseur (1) sur un banc d'équilibrage, dans lequel l'entraînement pneumatique du rotor de turbocompresseur (1) présente au moins une buse d'entraînement (2), pouvant être raccordée à une conduite d'air comprimé, pour produire un courant d'air propulseur, lequel est conduit à une roue de turbine du rotor de turbocompresseur, **caractérisé en ce que** la puissance d'écoulement du courant d'air propulseur est réglée au moyen d'une valve de régulateur de pression proportionnelle (10) placée en amont de la au moins une buse d'entraînement (2) et commandée par un dispositif de commande programmable à mémoire (24) en fonction de la vitesse de rotation du rotor de turbocompresseur (1), un algorithme de réglage étant enregistré, prêt a être consulté, dans une mémoire de données (28) affectée au dispositif de commande programmable à mémoire(24), lequel algorithme rend le dispositif de commande (24) capable, après son activation, de commander le procédé selon l'une des revendications précédentes.

12. Dispositif selon la revendication 11, **caractérisé par** un dispositif de freinage pneumatique pouvant être commandé par le dispositif de commande programmable à mémoire (24) et comportant une buse de freinage (3) pouvant être raccordée à la conduite d'air comprimé pour produire un courant d'air de freinage qui est conduit à la roue de turbine du rotor de turbocompresseur (1) en étant dirigé contre le sens de rotation du rotor de turbocompresseur (1).

13. Dispositif selon la revendication 12, **caractérisé en ce que** la buse de freinage (3) est reliée, au moyen d'une soupape à deux voies (16), soit à une conduite (6) par premier un clapet antiretour avec étranglement (15) réglable pour l'acheminement de l'air d'entraînement vers la buse d'entraînement (2), soit par une conduite (17) avec une soupape (19, 30) pour l'acheminement d'air de freinage.

14. Dispositif selon la revendication 13, **caractérisé en ce que** la soupape (30) destinée à l'acheminement d'air de freinage est une soupape à plusieurs voies (30) raccordée sur la sortie de la valve de régulateur de pression proportionnelle (10), à l'aide de laquelle la valve de régulateur de pression (10) peut être reliée à la buse d'entraînement (2) ou à la buse de freinage (3).

15. Dispositif selon l'une des revendications 11 à 14, **caractérisé en ce que** pour démarrer rapidement le rotor de turbocompresseur (1), la au moins une buse d'entraînement (2) est raccordée, en parallèle à la valve de régulateur de pression proportionnelle (10), à une soupape de démarrage rapide (7) commandée en fonction du temps par le dispositif de commande programmable à mémoire, soupape de démarrage rapide grâce à laquelle la au moins une buse d'entraînement (2) peut être reliée à la conduite d'air comprimé.
